# EUROPEAN PATENT APPLICATION

(11) **EP 4 636 040 A1**
(43) Date of publication of application: **22.10.2025**
(21) Application number: 24170313.1
(22) Date of filing: 15.04.2024
(51) Int. Cl.: C08L 71/12

(54) **THERMOPLASTIC COMPOSITIONS**

(71) Applicant: SHPP Global Technologies B.V., 4612 PX Bergen op Zoom (NL)
(72) Inventor: KOEVOETS, Christiaan Henricus Johannes, 4612PX Bergen op Zoom (NL); CHRISTIANEN, Jeffrey Marinus Wilhelmus Nicolaas, 4612PX Bergen op Zoom (NL)
(74) Representative: Balder IP Law, S.L.

(57) **Abstract**

A thermoplastic composition comprises: a poly(arylene ether) comprising phenolic terminal functional groups; a polystyrene comprising greater than 98 wt%, preferably greater than 99 wt% repeating units derived from styrene; a hydrogenated block copolymer of an alkenyl aromatic monomer and a conjugated diene; optionally, an additive composition, wherein the weld strength of a welded article comprising the thermoplastic composition is at least 80% of the material strength of the thermoplastic composition.

## Description

### BACKGROUND

This disclosure relates to thermoplastic compositions, weldable parts, articles thereof, and methods of manufacture thereof.

Poly(arylene ethers) have excellent hydrolysis resistance, high temperature resistance, flame retardance, very low dielectric loss and dielectric constant. Poly(arylene ethers) also exhibit high glass transition temperature values. Poly(arylene ether) compositions often include vinyl aromatic polymers such as rubber-modified (high impact) polystyrene (known as "HIPS"), to improve properties like impact strength and ease of processing for various applications such as consumer products, for example, plumbing fixtures, electrical boxes, and automotive parts. Because of their broad use, it is desirable to provide thermoplastic compositions including poly(arylene ethers) that are weldable.

However, the strength and impact of a molded part at the weld line is usually lower than in other sections of the part. Reduced weld line strength imposes limitations on the design of parts.

There accordingly remains a need in the art for weldable thermoplastic compositions. It would be a further advantage if the thermoplastic compositions had improved weld strength as compared with the material strength.

### BRIEF DESCRIPTION

The above-described and other deficiencies of the art are met by a thermoplastic composition comprising: a poly(arylene ether) comprising phenolic terminal functional groups; a polystyrene comprising greater than 98 wt%, preferably greater than 99 wt% repeating units derived from styrene; a hydrogenated block copolymer of an alkenyl aromatic monomer and a conjugated diene; optionally, an additive composition, wherein the weld strength of a welded article comprising the thermoplastic composition is at least 80% of the material strength of the thermoplastic composition.

In an aspect, a weldable part comprises the above-described thermoplastic composition.

In another aspect, a method for forming the weldable part comprises molding, extruding, or shaping the above-described thermoplastic composition to form the weldable part.

In yet another aspect, a welded article comprises the above-described weldable part.

In still another aspect, a method for forming the above-described welded article comprises welding the above-described weldable part to another thermoplastic part to provide the welded article.

The above described and other features are exemplified by the following detailed description and examples.

### DETAILED DESCRIPTION

Component parts can be joined to form an article using welding, such as, for example, ultrasonic welding. The strength and impact resistance of a molded article at the weld line is usually lower than in other sections of the article. Indeed, the weld line is usually the weakest area in a molded article and generally is the first to fail when the article is exposed to force. It is desirable for the weld joint strength to be the same as the material strength of the molded parts. In other words, the weld joint of the article should be as than the constituent material of the parts that are assembled together.

The present inventors surprisingly found that a combination of a poly(arylene ether), polystyrene, and a hydrogenated block copolymer of an alkenyl aromatic monomer and a conjugated diene provides improved weld strength as compared with thermoplastic compositions including poly(arylene ethers) wherein high impact polystyrene ("HIPS") is present. Molded parts of the thermoplastic compositions could be welded, wherein the weld strength is substantially improved relative to the material strength of the molded parts as compared with molded parts of thermoplastic compositions that include HIPS.

The poly(arylene ether) is derived from monomers including a monohydric phenol, or a monohydric phenol and a dihydric phenol. The monohydric phenol may have the following formula (1) 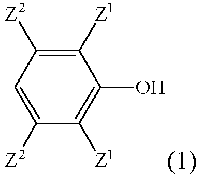 wherein Z¹ is independently at each occurrence is halogen, unsubstituted or substituted C₁-₁₂ hydrocarbyl provided that the hydrocarbyl group is not tertiary hydrocarbyl, C₁-₁₂ hydrocarbylthio, C₁-₁₂ hydrocarbyloxy, or C₂-₁₂ halohydrocarbyloxy wherein at least two carbon atoms separate the halogen and oxygen atoms; and Z² is independently at each occurrence hydrogen, halogen, unsubstituted or substituted C₁-₁₂ hydrocarbyl provided that the hydrocarbyl group is not tertiary hydrocarbyl, C₁-₁₂ hydrocarbylthio, C₁-₁₂ hydrocarbyloxy, or C₂-₁₂ halohydrocarbyloxy wherein at least two carbon atoms separate the halogen and oxygen atom.

Exemplary monohydric phenols include 2,6-dimethylphenol, 2-methylphenol, 2,5-dimethylphenol, 2-allyl-6-methylphenol, 2,3,6-trimethylphenol, 2-methyl-6-phenyl phenol, 2-cyclohexyl-6-methylphenol, or a combination thereof. For example, the monohydric phenol may include 2,6-dimethylphenol.

In some aspects, the poly(arylene ether) includes repeating units derived from a monohydric phenol having the formula (1a) 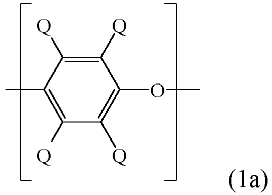 wherein Q^{1a} is C₁-C₁₂ primary or secondary alkyl or cycloalkyl, preferably C₁-C₁₂ primary alkyl, more preferably C₁-C₆ primary alkyl, even more preferably methyl; Q^{1b} is halogen, C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms, preferably C₁-C₁₂ alkyl or C₃-C₁₂ cycloalkyl, more preferably C₁-C₆ alkyl, even more preferably methyl. Each occurrence of Q² is independently hydrogen, halogen, unsubstituted or substituted C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms, preferably hydrogen; and e is 1 to 200, preferably 1 to 100; and y is 1 or 2, preferably 2. For example, Q^{1a} is methyl or cyclohexyl, and Q^{1b} is halogen, unsubstituted C₁-C₁₂ alkyl provided that the alkyl group is not tertiary alkyl, or unsubstituted C₁-C₁₂ aryl.

In addition to repeating units derived from a monohydric phenol, the monomers may comprise a dihydric phenol having the structure of formula (2) 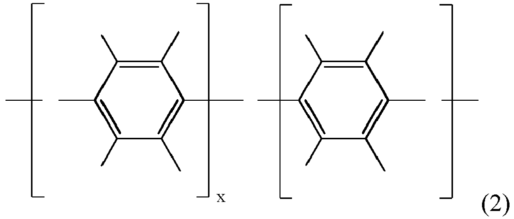 wherein each occurrence of Q¹ and Q² independently comprises halogen, unsubstituted or substituted C₁₋₁₅ primary or secondary hydrocarbyl, C₁-₁₂ hydrocarbylthio, C₁-₁₂ hydrocarbyloxy, or C₂-₁₂ halohydrocarbyloxy wherein at least two carbon atoms separate the halogen and oxygen atoms; each occurrence of Q³ and Q⁴ independently comprises hydrogen, halogen, unsubstituted or substituted C₁-C₁₅ primary or secondary hydrocarbyl, C₁-C₁₂ hydrocarbylthio, C₁-₁₂ hydrocarbyloxy, or C₂-₁₂ halohydrocarbyloxy wherein at least two carbon atoms separate the halogen and oxygen atoms; x and y have an average value, and are each independently 0-30, or 0-20, preferably 0-15, still more preferably 0-10, even more preferably 0-8, provided that the sum of x and y is at least 2, preferably at least 3, more preferably at least 4.

In Formula (2), L may be of formula (3) 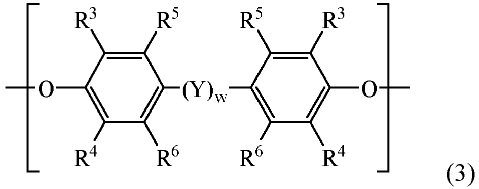
wherein each occurrence of R³, R⁴, R⁵, and R⁶ independently comprises hydrogen, halogen, unsubstituted or substituted C₁-₁₂ primary or secondary hydrocarbyl, C₁-₁₂ hydrocarbylthio, C₁-₁₂ hydrocarbyloxy, or C₂-₁₂ halohydrocarbyloxy wherein at least two carbon atoms separate the halogen and oxygen atoms; w is 0 or 1; and Y is 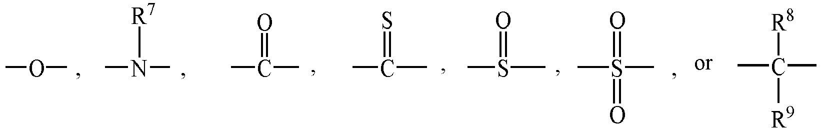
wherein each occurrence of R⁷ independently comprises hydrogen or C₁-₁₂ hydrocarbyl, each occurrence of R⁸ and R⁹ independently comprises hydrogen, C₁-₁₂ hydrocarbyl, or R⁸ and R⁹ together form a C₄₋₁₂ cyclohydrocarbylene with the carbon atom. In an aspect in formula (3), each of R³, R⁴, R⁵, and R⁶ independently comprises hydrogen, halogen, unsubstituted or substituted C₁₋₆ primary or secondary hydrocarbyl; and w is 0 or 1. In an aspect of formula (3), R³, R⁴, R⁵, and R⁶ independently comprise hydrogen, halogen, or C₁-C₁₂ alkyl, more preferably hydrogen or C₁-C₆ alkyl; and w is 0 or 1, preferably 1. When w is 0, the two aryl groups are connected by a single bond.

Examples of dihydric phenols include 3,3',5,5'-tetramethy1-4,4'-biphenol, 2,2-bis(3-methyl-4-hydroxyphenyl)propane, 2,2-bis(3,5-dimethy-4-hydroxyphenyl)propane, 1,1-bis(4-hydroxyphenyl)methane, 1, 1-bis(4-hydroxyphenyl)ethane, 2,2-bis(4-hydroxyphenyl)propane, 2,2-bis(4-hydroxyphenyl)butane, 2,2-bis(4-hydroxyphenyl)octane, 1,1-bis(4-hydroxyphenyl)propane, 1,1-bis(4-hydroxyphenyl)-*n*-butane, bi s(4-hydroxyphenyl)phenylmethane, 2,2-bis(4-hydroxy-3-methylphenyl)propane, 1,1-bis(4-hydroxy-3-methylphenyl)cyclohexane, 1,1-bis(4-hydroxy-3,5-dimethylphenyl)cyclopentane, 1,1-bis(4-hydroxy-3,5-dimethylphenyl)cyclohexane, 1,1-bis(4-hydroxy-3-methylphenyl)cycloheptane, 1,1-bis(4-hydroxy-3,5-dimethylphenyl)cycloheptane, 1,1 -bis(4-hydroxy-3-methylphenyl)cyclooctane, 1,1-bis(4-hydroxy-3,5-dimethylphenyl)cyclooctane, 1,1 -bis(4-hydroxy-3-methylphenyl)cyclononane, 1,1-bis(4-hydroxy-3,5-dimethylphenyl)cyclononane, 1,1-bis(4-hydroxy-3-methylphenyl)cyclodecane, 1,1-bis(4-hydroxy-3,5-dimethylphenyl)cyclodecane, 1,1-bis(4-hydroxy-3-methylphenyl)cycloundecane, 1,1-bis(4-hydroxy-3,5-dimethylphenyl)cycloundecane, 1,1-bis(4-hydroxy-3-methylphenyl)cyclododecane, 1,1-bis(4-hydroxy-3,5-dimethylphenyl)cyclododecane, 1,1-bis(4-hydroxy-3-t-butylphenyl)propane, 2,2-bis(4-hydroxy-2,6-dimethylphenyl)propane, 2,2-bis(4-hydroxy-3-bromophenyl)propane, 1,1-bis(4-hydroxyphenyl)cyclopentane, 1,1-bis(4-hydroxyphenyl)cyclohexane, 2,2',6,6'-tetramethyl-3,3',5,5'-tetrabromo-4,4'-biphenol, 2,2',5,5'-tetramethyl-4,4'-biphenol, or a combination thereof. For example, the dihydric phenol includes 2,2-bis(3,5-dimethyl-4-hydroxyphenol)propane.

In another aspect, L in formula (2) may be of formula (4) 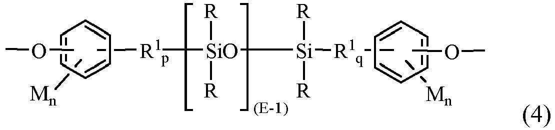 wherein E is 6-100, or 11-80, or 11-60; and each occurrence of R independently comprises an unsubstituted or substituted C₁₋₁₃ alkyl, C₁₋₁₃ alkoxy, C₃₋₆ cycloalkyl, C₃₋₆ cycloalkoxy, C₆₋₁₄ aryl, C₆₋₁₀ aryloxy, C₇₋₁₃ arylalkylene, or C₇₋₁₃ alkylarylene. The foregoing groups can be fully or partially halogenated with fluorine, chlorine, bromine, or iodine, or a combination thereof. Further in formula (4), each p and q are independently 0 or 1; R¹ is a divalent C₂₋₈ aliphatic group, and each occurrence of M independently comprises halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n independently comprises 0, 1, 2, 3, or 4. Preferably in formula 4, E is 5-60; each occurrence of R independently comprises C₁₋₆ alkyl, C₃₋₆ cycloalkyl, or C₆₋₁₄ aryl, more preferably methyl; p and q are each 1; R¹ is a divalent C₂₋₈ aliphatic group, M is halogen, cyano, C₁₋₄ alkyl, C₁₋₄ alkoxy, C₆₋₁₀ aryl, C₇₋₁₂ aralkyl, or C₇₋₁₂ alkylaryl, more preferably methyl or methoxy; and each n independently comprises 0, 1, or 2.

For example, L of Formula (2) may be derived from the dihydric phenol of formula (4a) 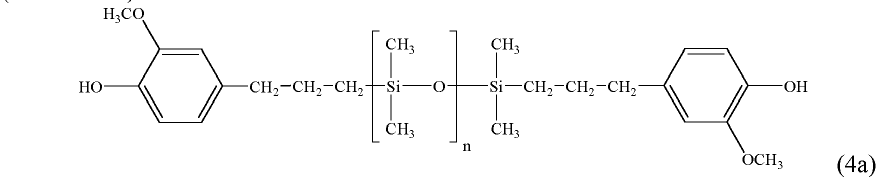 wherein n is, on average, 5 to 100, specifically 10 to 60.

The poly(arylene ether) may have a structure of formula (5) 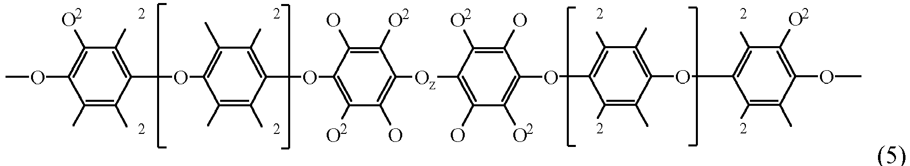
wherein each occurrence of Q^{1a}, Q^{1b}, and Q² are independently as defined above. Each occurrence of R¹, R², R³, and R⁴ is independently hydrogen, halogen, C₁-C₁₂ hydrocarbyl provided that the hydrocarbyl group is not tertiary hydrocarbyl, C₁-C₁₂ hydrocarbylthio, C₁-C₁₂ hydrocarbyloxy, or C₂-C₁₂ halohydrocarbyloxy wherein at least two carbon atoms separate the halogen and oxygen atoms. Each occurrence of R⁵ is independently Q^{1a} or a (C₁-C₆-hydrocarbyl)(C₁-C₆-hydrocarbyl)aminomethylene group; x' and y' represent the number of repeat units, and hence the relative mole ratios, of the arylene ether units wherein x' and y' are each independently 0 to 50, provided that the sum of x' and y' is at least 2; or e is the number of repeating units of the arylene ether unit and e is 1 to 200, preferably 1 to 100; z is 0 or 1. For example, x' and y' can be independently 0 to 30. In formula (5), group Y is a divalent linking group of the formula 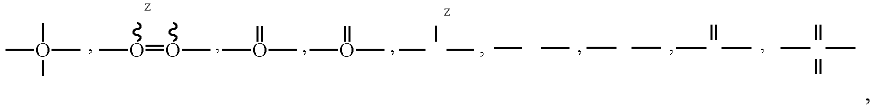 or 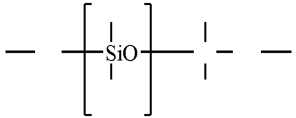
wherein each occurrence of R^{a}, R^{b}, R^{c}, R^{d}, and R^{e} is independently hydrogen, C₁-C₁₂ hydrocarbyl, or C₁-C₆ hydrocarbylene, optionally wherein R^{a} and R^{b} or R^{c} and R^{d} together are a C₄-C₈ alkylene group, each occurrence of R⁶ is independently hydrogen, a C₁-₁₄ hydrocarbyl, a C₁-₁₄ halohydrocarbyl, or a C₁-₁₄ heterohydrocarbyl, preferably C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkyl, C₇₋₁₃ arylalkoxy, C₇₋₁₃ alkylaryl, or C₇₋₁₃ alkylaryloxy, each R⁷ is a C₁₋₆ hydrocarbylene group, preferably a divalent C₂₋₈ aliphatic group, more preferably dimethylene, trimethylene, or tetramethylene, and E is, on average, 2 to 200, 2 to 125, 5 to 125, 5 to 100, 5 to 50, 20 to 80, 10 to 60, or 5 to 20.

For example, the poly(arylene ether) is of the formula (5a) 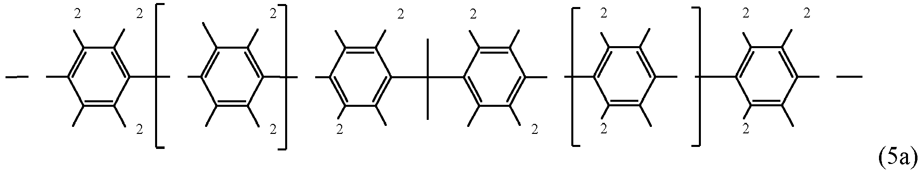 wherein Q^{1a}, Q^{1b}, Q², R¹, R², R³, R⁴, R⁵, J-Z, x', and y' are as defined above. In another specific aspect, the monohydric phenol comprises 2,6-dimethyl phenol, 2,3,6-trimethyl phenol, or a combination thereof, and the dihydric phenol comprises 2,2-bis(3,5-dimethyl-4-hydroxyphenyl)propane.

Poly(arylene ethers), for example, poly(phenylene ether), which optionally may be in the form of a copolymer of two or more monomers, for example a terpolymer, and the raw materials used to produce the poly(arylene ethers) may be, or may be formed from, renewable, sustainable, bio-circular, circular, lower carbon footprint feedstocks, upcycled, and/or post-consumer/ post-industrial recycled materials, including pyrolysis oil ("py-oil") .

Poly(arylene ethers) made from renewable sources may include, for example, a bio-content or PCR content of up to about 99.9%, about 1-99%, 5- 95%, 55-99%, or 80-99%, 1-50%, 1-25%, 1-15%, 1-10%, or 1-5%, based, e.g., on the monomer source. The poly(arylene ether) can be, e.g., an oligomer with as few as two repeating units to ultra-high molecular weight poly(arylene ethers). The weight average molecular weight of the poly(arylene ethers) in one non-limiting embodiment may range from 600 to 200,000 grams per mole, as determined by gel permeation chromatography. In another non-limiting embodiment, the poly(arylene ethers) may have an intrinsic viscosity of up to 1.5 deciliters per gram (dl/g) as measured at 25°C in chloroform. Poly(arylene ethers) made from renewable sources may include material made by a mass balance approach and certified by regulatory bodies such as, for example, the ISCC Plus.

Poly(arylene ethers) in one embodiment may be prepared by oxidative polymerization of monomers in the presence of a polymerization catalyst in the presence of oxygen. Any of the components used in the polymerization reaction or their synthetic precursors, or the solvents used in the process, may be bio-sourced, bio-circular, or renewable raw materials. Such components and precursors include monomers (e.g., monohydric phenol, dihydric phenol and other comonomers), reagents, solvents, catalysts (e.g., a metal source, a secondary alkylene diamine ligand, a tertiary monoamine, and optionally a secondary monoamine or alternatively enzyme catalysts), gases (e.g., oxygen gas), or any combinations thereof. In some aspects, reaction components used in the polymerization of poly(arylene ethers) may be from sources as listed in the EU Renewable Energy Directive Annex IX.

Poly(arylene ethers) can be further processed, such as by redistribution, or any chemical derivitization, such as post-polymerization end-group capping or coupling, to make other materials that can transfer the sustainability characteristic to the new material. Such reagents and/or their synthetic precursors may be sustainable, bio-sourced, bio-circular, or renewable raw materials, upcycled, and/or post-consumer/ post-industrial recycled materials, including pyrolysis oil ("py-oil"), to produce a poly(arylene ether).

Biosourced and sustainable materials may be derived from biomass sources or industrial sources such as waste (e.g., municipal waste). Biomass is a renewable organic material that comes from organic matter. Lignocellulosic biomass, the most abundant type of biomass and includes a wide variety of different biomass types including grasses, wood, energy crops, and agricultural and municipal wastes, is mostly composed of cellulose, hemicellulose, and lignin. Depolymerization of lignin, which is a phenolic polymer, can provide phenol. Solvents used in the production of monomers, such as methanol and acetone can be obtained from syngas, which is a product of the gasification of biomass.

Poly(arylene ether), such as a recycled poly(arylene ether) comprising an open- or closed-loop post-consumer recycled ("PCR") poly(arylene ether), an open- or closed-loop post-industrial recycled ("PIR") poly(arylene ether), or upcycled polyphenylene ether or a combination thereof may be used, provided that the desired property or combination of properties may be achieved. As used herein, the term "post-consumer recycle poly(arylene ether)" refers to a poly(arylene ether) that has reached the intended user or consumer and which has been collected or reclaimed after utilization by the end-user or consumer. Thus, for example, it is understood that that the term refers to a poly(arylene ether) material in whole or in part that would have otherwise been disposed of as waste, but has instead been collected and recovered (reclaimed) as a material input, in lieu of a virgin material, for a recycling or manufacturing process. PCR-poly(arylene ether) is inclusive of material that has been reprocessed from collected or reclaimed material by means of a manufacturing process, (including e.g., purification, sorting, and pretreating) and made into a product or into a component for incorporation into a product. Such recycled poly(arylene ether)s can be further processed, for example, into the form of powders, ground materials, flakes, pellets or other form. As used herein, the term "post-industrial recycled poly(arylene ether)" refers to a poly(arylene ether) polymer or polymers that have never reached the end user and that is production waste arising during polymerization reactions, during further processing, or during manufacturing the resin or an article and includes materials such as, but not limited to, sprues from injection molding, start-up material from injection molding or extrusion, extrusion scrap, molding scrap, edge trims from extruded sheets or films, and the like, including materials diverted from the waste stream during a manufacturing process for an article.

The poly(arylene ether) can have a number average molecular weight (Mₙ) of 600 to 10,000, or 400 to 2,500 grams per mole (g/mol) as determined by gel permeation chromatography (GPC). In some aspects, the poly(arylene ether) can have a weight average molecular weight (M_{w}) of 500 to 6,000 g/mol, each as determined by GPC. For example, the poly(arylene ether) can have a number average molecular weight (Mₙ) of 400 to 2,200 g/mol or 800 to 1,600 g/mol and a weight average molecular weight (M_{w}) of 600 to 5,000 g/mol or 800 to 4,500 g/mol, each as determined by GPC.

The poly(arylene ether) can have an intrinsic viscosity of 0.1 to 1.5 deciliter per gram measured by Ubbelohde viscometer at 25 °C in chloroform. Within that range the intrinsic viscosity may be at least 0.2, at least 0.25, or at least 0.3 dl/g and up to 1.4, up to 1.2, up to 1.0, 0.8, or up to 0.6 dl/g as measured at 25°C in chloroform. A range for the intrinsic viscosity may include any of the foregoing limits.

The poly(arylene ether) is present from 40-70 wt%, based on the total composition. Within that range, the poly(arylene) may be present from at least 45 wt%, or at least 50 wt% and up to 65 wt%, or up to 60 wt% based on the total composition. A range for the poly(arylene ether) may include any combination of the foregoing limits.

The poly(arylene ether) is the product of oxidative copolymerization of monomers comprising a monohydric phenol, a dihydric phenol, or a combination thereof, to form a poly(arylene ether) having phenolic terminal groups, and subsequent reaction with an alkylene oxide to form the poly(arylene ether).

The poly(arylene ether) having phenolic terminal groups can be formed by polymerization of monomers, for example, including a monohydric phenol, a dihydric phenol, or a combination thereof, by continuous addition of oxygen to a reaction mixture including the monomers, optionally a solvent, and a polymerization catalyst. The molecular oxygen (O₂) can be provided as air or pure oxygen. The polymerization catalyst can be a metal complex, i.e. a metal catalyst, including a transition metal cation, including cations from Group VIB, VIIB, VIIIB, or IB of the periodic table, or a combination thereof. The catalyst can include a metal cation such as chromium, manganese, cobalt, copper, or combination thereof and an anion such as chloride, bromide, iodide, sulfate, acetate, propionate, butyrate, laurate, palmitate, benzoate, or a combination of one or more of these anions, and optionally one or more charge-neutral ligands such as water, amines, phosphines, CO, or the like. Alternatively, a metal or metal oxide and an inorganic acid, organic acid, or an aqueous solution of such an acid can be combined to form a corresponding metal salt or hydrate in situ. For example, cuprous oxide and hydrobromic acid can be combined to generate cuprous bromide in situ.

Exemplary amine ligands can be, for example, a monoamine, an alkylene diamine, or a combination thereof. Monoamines include dialkylmonoamines (such as di-n-butylamine) and trialkylmonoamines (such as N,N-dimethylbutylamine). Exemplary monoamines include di-n-butylamine, n-butylethylamine, di-tert-butylamine, tert-butylethylamine, dimethylamine, di-n-propylamine, di-sec-butyl amine, dipentylamine, dihexylamine, dioctylamine, didecylamine , dibenzylamine, methylethylamine, methylbutylamine, dicyclohexylamine, N-ethylaniline, N-butyl aniline, N-methyl-2-methylaniline, N-methyl-2,6-dimethylaniline, diphenylamine, or a combination thereof. Exemplary diamines include a N,N'-di-tert-butylethylenediamine, or the like, and combinations thereof. Exemplary trialkylmonoamines include trimethylamine, triethylamine, tripropylamine, tributylamine, butyldimethylamine, phenyldiethylamine, or the like, and combinations thereof.

When the amine ligand includes a secondary amine such as di-n-butylamine, some of the secondary amine can be chemically incorporated into the poly(arylene ether) having phenolic terminal groups at the benzylic position of terminal monohydric phenol units. The covalently bound monoamine groups can be present as aminomethyl groups ortho to the phenol oxygen in terminal units as shown below:

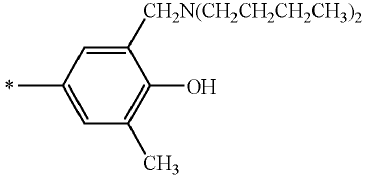

The amount of covalently bound monoamine groups can be determined by ¹H-NMR spectroscopy. Covalently bound monoamine groups can adversely affect the oxidative stability of capped poly(arylene ether) and can result in yellowing of the capped poly(arylene ether) upon heat aging.

In addition to the poly(arylene ether), the composition comprises polystyrene. As used herein, the term "polystyrene" refers to a polymer comprising at least 90 wt% of repeating units derived from polymerization of styrene. In some aspects, the polystyrene comprises at least 95 wt%, specifically at least 98 wt%, of repeating units derived from polymerization of styrene. In some aspects, the polystyrene is a styrene homopolymer. The styrene homopolymer can be atactic, isotactic, or syndiotactic.

Polystyrene can have a number average molecular weight of about 10,000 to about 200,000 atomic mass units, specifically about 30,000 to about 100,000 atomic mass units. In a particular aspect, polystyrene is an atactic homopolystyrene having a number average molecular weight of about 30,000 to about 100,000 atomic mass units.

The composition comprises the polystyrene in an amount of about 25-60 wt% based on the total weight of the composition. Within that range, the thermoplastic composition includes up to 55 wt%, up to 50 wt%, up to 45 wt%, or up to 40 wt% of the polystyrene based on the total weight of the composition. A range of the polystyrene may include any combination of the foregoing limits.

As polystyrene is defined as comprising at least 90 wt% of repeating units derived from polymerization of styrene, it therefore excludes styrenic copolymers comprising less than 90 wt% polymerized styrene. For example, excluded from the polystyrene component are rubber-modified polystyrenes comprising more than 10 wt% rubber. Rubber-modified polystyrenes are sometimes referred to as "high-impact polystyrenes" or "HIPS". As another example, excluded from the polystyrene component are styrenic block copolymers comprising more than 10 wt% of repeating units derived from any monomer or combination of monomers other than styrene. Although such polymers are not polystyrene as defined herein, they can, optionally, be included in the composition as an additional component. However, it may be preferred to limit their quantity or completely exclude them. For example, in some aspects, the composition comprises rubber-modified polystyrene in an amount of less than or equal to 5 wt%, less than 1 wt%, less than 0.5 wt%, less than 0.1 wt%, or less than 0.01 wt% based on the total thermoplastic composition. In some aspects, the composition is free of rubber-modified polystyrene.

In addition to a poly(arylene ether) and the polystyrene, the thermoplastic compositions include a hydrogenated block copolymer of an alkenyl aromatic monomer and a conjugated diene. The alkenyl aromatic monomer used to prepare the hydrogenated block copolymer can have the structure 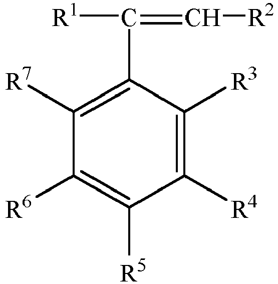 wherein R¹ and R² each independently represent a hydrogen atom, a C₁-C₈ alkyl group, or a C₂-C₈ alkenyl group; R³ and R⁷ each independently represent a hydrogen atom or a C₁-C₈ alkyl group; and R⁴, R⁵, and R⁶ each independently represent a hydrogen atom, a C₁-C₈ alkyl group, or a C₂-C₈ alkenyl group, or R⁴ and R⁵ are taken together with the central aromatic ring to form a naphthyl group, or R⁵ and R⁶ are taken together with the central aromatic ring to form a naphthyl group. Specific alkenyl aromatic monomers include, for example, styrene, methylstyrenes such as alpha-methylstyrene and p-methylstyrene, and t-butylstyrenes such as 3-t-butylstyrene and 4-t-butylstyrene. In some aspects, the alkenyl aromatic monomer is styrene.

The conjugated diene used to prepare the hydrogenated block copolymer can be a C₄-C₂₀ conjugated diene. Suitable conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and combinations thereof. In some aspects, the conjugated diene is 1,3-butadiene, 2-methyl-1,3-butadiene, or a combination thereof. In some aspects, the conjugated diene is 1,3-butadiene.

The hydrogenated block copolymer is a copolymer comprising (A) at least one block derived from an alkenyl aromatic compound and (B) at least one block derived from a conjugated diene, in which the aliphatic unsaturated group content in the block (B) is at least partially reduced by hydrogenation. In some aspects, the aliphatic unsaturation in the (B) block is reduced by at least 50 percent, or at least 70 percent. The arrangement of blocks (A) and (B) includes a linear structure, a grafted structure, and a radial teleblock structure with or without a branched chain. Linear block copolymers include tapered linear structures and non-tapered linear structures. In some aspects, the hydrogenated block copolymer has a tapered linear structure. In some aspects, the hydrogenated block copolymer has a non-tapered linear structure. In some aspects, the hydrogenated block copolymer comprises a (B) block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of (A) and (B), wherein the molecular weight of each (A) block can be the same as or different from that of other (A) blocks, and the molecular weight of each (B) block can be the same as or different from that of other (B) blocks. In some aspects, the hydrogenated block copolymer is a diblock copolymer, a triblock copolymer, or a combination thereof.

In some aspects, the hydrogenated block copolymer consists of blocks derived from the alkenyl aromatic compound and the conjugated diene. It does not comprise grafts formed from these or any other monomers. It also consists of carbon and hydrogen atoms and therefore excludes heteroatoms. In other aspects, the hydrogenated block copolymer includes the residue of one or more acid functionalizing agents, such as maleic anhydride.

In some aspects, the hydrogenated block copolymer comprises a polystyrene-poly(ethylene-butylene)-polystyrene triblock copolymer having a weight average molecular weight of 200,000 to 400,000 grams/mole.

Methods for preparing hydrogenated block copolymers are known in the art and many hydrogenated block copolymers are commercially available. Illustrative commercially available hydrogenated block copolymers include the polystyrene-poly(ethylene-propylene) diblock copolymers available from Kraton Performance Polymers Inc. as KRATON^{™} G1701 (having about 37 wt% polystyrene) and G1702 (having about 28 wt% polystyrene); the polystyrene-poly(ethylene-butylene)-polystyrene triblock copolymers available from Kraton Performance Polymers Inc.as KRATON^{™} G1641 (having about 33 wt% polystyrene), G1650 (having about 30 wt% polystyrene), G1651 (having about 33 wt% polystyrene), and G1654 (having about 31 wt% polystyrene); and the polystyrene-poly(ethylene-ethylene/propylene)-polystyrene triblock copolymers available from Kuraray as SEPTON^{™} S4044, S4055, S4077, and S4099. Additional commercially available hydrogenated block copolymers include polystyrene-poly(ethylene-butylene)-polystyrene (SEBS) triblock copolymers available from Dynasol as CALPRENE^{™} H6140 (having about 31 wt% polystyrene), H6170 (having about 33 wt% polystyrene), H6171 (having about 33 wt% polystyrene), and H6174 (having about 33 wt% polystyrene); and from Kuraray as SEPTON^{™} 8006 (having about 33 wt% polystyrene) and 8007 (having about 30 wt% polystyrene); polystyrene-poly(ethylene-propylene)-polystyrene (SEPS) copolymers available from Kuraray as SEPTON^{™} 2006 (having about 35 wt% polystyrene) and 2007 (having about 30 wt% polystyrene); and oil-extended compounds of these hydrogenated block copolymers available from Kraton Performance Polymers Inc.as KRATON^{™} G4609 (containing about 45% mineral oil, and the SEBS having about 33 wt% polystyrene) and G4610 (containing about 31% mineral oil, and the SEBS having about 33 wt% polystyrene); and from Asahi as TUFTEC^{™} H1272 (containing about 36% oil, and the SEBS having about 35 wt% polystyrene). Mixtures of two of more hydrogenated block copolymers can be used.

In some aspects, the hydrogenated block copolymer is a food grade hydrogenated block copolymer. In the US, substances used in food contact articles are defined and regulated according to 31 CFR 170.39. Under the European Food Safety Authority, general requirements for all food contact materials are defined in Framework Regulation EC 1935/2004; Good Manufacturing Practice for materials and articles intended to come in contact with food is described in Regulation EC 2023/2006. Food grade hydrogenated block copolymers include KRATON^{™} G1650, G1651, G1652, G1654, and G1657, which are all polystyrene-poly(ethylene-butylene)-polystyrene triblock copolymers available from Kraton Performance Polymers Inc.

The thermoplastic compositions include 5-15 wt% of the hydrogenated block copolymer based on total composition. Within that range, the hydrogenated block copolymer may be present from 8-12 wt% based on the total composition.

In some aspects, the thermoplastic composition comprises less than 1 part per million by weight of free butadiene, based on the total weight of the thermoplastic composition. The presence of free (unpolymerized) butadiene is generally associated with the presence of unhydrogenated polymers and copolymers comprising polybutadiene. For example, including in the thermoplastic composition a polybutadiene-containing rubber-modified polystyrene can make it difficult to achieve a free butadiene concentration less than 1 part per million. The term "rubber-modified polystyrene" as used herein refers to the product of combining styrene-butadiene random copolymer and/or polybutadiene with polystyrene, either during or after polymerization of the polystyrene, such that the finished basic polymers contains not less than 80 wt% of total polymer units derived from styrene monomer. Rubber-modified polystyrene is distinct from styrene-butadiene block copolymers. In some aspects, the thermoplastic composition excludes rubber-modified polystyrene. It should be noted that it is possible to achieve a free butadiene content of less than 1 part per million while still including in thermoplastic composition. hydrogenated polymers and copolymers in which polybutadiene has been hydrogenated.

An additive composition can be used, comprising one or more additives selected to achieve a desired property, with the proviso that the additive(s) are also selected so as to not significantly adversely affect a desired property (i.e., weld strength) of molded samples of the thermoplastic composition. The additive composition or individual additives can be mixed at a suitable time during the mixing of the components for forming the composition. The additive can be soluble or non-soluble in poly(arylene ether). The additive composition can include an impact modifier, flow modifier, a reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g, a dye or pigment), surface effect additive, radiation stabilizer, flame retardant, or a combination thereof. In general, additives are used in amounts generally known to be effective. For example, the total amount of the additive composition can be 0.001 to 10.0 wt%, or 0.01 to 5 wt%, or 0.01 to 1 wt%, each based on the total weight of the composition.

In some aspects, the thermoplastic composition comprises: a poly(arylene ether) comprising phenolic terminal functional groups, wherein the poly(arylene ether) comprises an intrinsic viscosity of 0.2 to 1.5 dl/g measured by Ubbelohde viscometer at 25 °C in chloroform; a polystyrene comprising greater than 98 wt%, preferably greater than 99 wt% repeating units derived from styrene; a hydrogenated block copolymer of an alkenyl aromatic monomer and a conjugated diene; optionally, an additive composition, wherein the weld strength of a welded article comprising the thermoplastic composition is at least 80% of the material strength of the thermoplastic composition.

In some aspects, the thermoplastic composition comprises: a poly(arylene ether) comprising phenolic terminal functional groups, wherein the poly(arylene ether) comprises an intrinsic viscosity of 0.2 to 1.5 dl/g measured by Ubbelohde viscometer at 25 °C in chloroform; a homopolystyrene; a hydrogenated block copolymer of an alkenyl aromatic monomer and a conjugated diene; optionally, an additive composition, wherein the weld strength of a welded article comprising the thermoplastic composition is at least 80% of the material strength of the thermoplastic composition.

In some aspects, the thermoplastic compositions include a poly(arylene ether) comprising phenolic terminal functional groups; 25-60 wt% of a polystyrene comprising greater than 96 wt%, preferably 98 wt% repeating units derived from styrene; 5-15 wt% of the hydrogenated block copolymer of an alkenyl aromatic monomer and a conjugated diene; and optionally, up to 10 wt% of an additive composition, wherein the poly(arylene ether), the polystyrene, the hydrogenated block copolymer, and the optional additive composition total 100 wt%.

In some aspects, the thermoplastic compositions include a poly(arylene ether) comprising phenolic terminal functional groups; 25-60 wt% of a homopolystyrene; 5-15 wt% of the hydrogenated block copolymer of an alkenyl aromatic monomer and a conjugated diene; and optionally, up to 10 wt% of an additive composition, wherein the poly(arylene ether), the polystyrene, the hydrogenated block copolymer, and the optional additive composition total 100 wt%.

In some aspects, the thermoplastic compositions include a poly(arylene ether) comprising phenolic terminal functional groups, wherein the poly(arylene ether) comprises an intrinsic viscosity of 0.1 to 1.5 dl/g, preferably 0.2 to 1.5 dl/g measured by Ubbelohde viscometer at 25 °C in chloroform; 25-60 wt% of a homopolystyrene; 5-15 wt% of the hydrogenated block copolymer of an alkenyl aromatic monomer and a conjugated diene; and optionally, up to 10 wt%, preferably up to 5 wt%, more preferably up to 1 wt% of an additive composition, wherein the poly(arylene ether), the polystyrene, the hydrogenated block copolymer, and the optional additive composition total 100 wt%.

In some aspects, the thermoplastic compositions include 40-70 wt% of a poly(arylene ether) comprising phenolic terminal functional groups, wherein the poly(arylene ether) comprises an intrinsic viscosity of 0.1 to 1.5 deciliter per gram measured by Ubbelohde viscometer at 25 °C in chloroform; 25-60 wt% of a polystyrene comprising an atactic homopolystyrene having a having a melt flow index of 1 to 5 grams per 10 minutes measured according to ISO 1133-4 (2011) at 200 °C and 5 kilogram load; 5-15 wt% of a hydrogenated block copolymer of an alkenyl aromatic monomer and a conjugated diene comprising a polystyrene-poly(ethylene-butylene)-polystyrene triblock copolymer comprising a polystyrene content of about 25 to 40 wt% and a weight average molecular weight of about 200,000 to 400,000 grams/mole; optionally, up to 10 wt% of an additive composition, wherein the poly(arylene ether), the polystyrene, the hydrogenated block copolymer, and the optional additive composition total 100 wt%.

The thermoplastic compositions may be manufactured by various methods. For example, the components are first blended, optionally with fillers in a HENSCHEL-Mixer high speed mixer. Other low shear processes, including but not limited to hand mixing, may also accomplish this blending. The blend is then fed into the throat of a twin-screw extruder via a hopper. Alternatively, at least one of the components may be incorporated into the composition by feeding directly into the extruder at the throat or downstream through a sidestuffer. Additives may also be compounded into a masterbatch with a desired polymeric polymer and fed into the extruder. The extruder is generally operated at a temperature higher than that necessary to cause the composition to flow. The extrudate is immediately quenched in a water bath and pelletized. The pellets so prepared may be one-fourth inch long or less as desired. Such pellets may be used for subsequent molding, shaping, or forming.

Weldable shaped, formed, or molded parts comprising the thermoplastic compositions are also provided. The thermoplastic compositions can be molded into useful shaped parts by a variety of methods, such as injection molding, extrusion, rotational molding, blow molding and thermoforming. Although the Examples demonstrate that the present thermoplastic compositions are applicable to ultrasonic welding, the welding applications are not limited to ultrasonic welding. The thermoplastic compositions are applicable to other types of welding techniques including: linear vibration welding, spin welding, hot plate welding, hot bar welding, impulse welding, hot gas welding, extrusion welding, resistive implant welding, induction welding, high frequency welding, infrared welding, and laser welding. In some aspects, a weldable part is made from the thermoplastic compositions and the other weldable part is made from an auxiliary thermoplastic composition that is known in the art to be suitable for welding. Exemplary auxiliary thermoplastics include acrylonitrile butadiene styrene (ABS), polystyrene (PS), polypropylene (PP), polyethylene (PE), polyvinyl chloride (PVC), polymethylmethacrylate (PMMA), polycarbonate (PC), and combinations thereof. In certain aspects, both parts are prepared from the thermoplastic compositions and do not include parts made from auxiliary thermoplastics.

In general, molded samples of thermoplastic compositions become moldable when subjected to specific heating and regain solidity upon cooling. Initiation of the weld requires elevating the thermoplastic surface to its melting point. Upon heating, the materials are fused and sustained under pressure until cooling commences. The pressure applied during cooling may range from 2.5 to 4.2 MPa, from 2.8 MPa to 4.2 MPa, or 3.0 MPa to 4.2 MPa.

For example, ultrasonically welded articles can be prepared using an ultrasonic welding device and the parts prepared from thermoplastic compositions. The above-described weldable shaped, formed, or molded thermoplastic parts that are to be joined together using ultrasonic welding can be placed one on top of the other on a supportive surface (i.e., "fixture"). A titanium or plated aluminum component (i.e., "horn") is brought into contact with the upper thermoplastic part. Pressure is applied to the horn clamping the thermoplastic parts together against the fixture. The horn is then vibrated vertically e.g., 15 kHz or 30 kHz times per second for a pre-determined time (i.e. "weld time"). The mechanical vibrations are transmitted through the thermoplastic parts to the joint interface to create frictional heat. When the temperature at the joint interface reaches the melting point, the thermoplastic composition melts and flows and the vibration is stopped so that the thermoplastic composition begins to cool. The clamping force is maintained for a predetermined time (i.e., "hold time") to allow the thermoplastic parts to fuse as the melted thermoplastic cools and solidifies. Once the melted thermoplastic has solidified, the clamping force is removed and the horn is retracted. The thermoplastic parts now joined is removed from the fixture as one part (i.e., the ultrasonically welded article).

Advantageously, welding avoids the use of solvents, adhesives and mechanical fasteners. Welding assembly can be used in applications such as automotive applications, medical applications, electrical and electronic applications, and consumer applications. Ultrasonic welding of thermoplastics is a joining technique that is especially well suited for medical applications. It prevents the introduction of contaminants or sources of degradation to the weld, producing a medical device essentially free of contaminants, and allows for a very fast and highly reproducible production cycles. Non-limiting examples of medical devices include a syringe, a blood filter housing, a blood bag, a solution bag, an intravenous connector, a dialyzer, a catheter, a medical storage tray, a medical appliance, medical tubing, a cardiac pacemaker, a cardiac defibrillator, a cannula, an implantable prosthesis, a cardiac assist device, a heart valve, a vascular graft, an extra-corporeal device, an artificial organ, a pacemaker lead, a defibrillator lead, a blood pump, a balloon pump, an A-V shunt, a membrane for cell encapsulation, a wound dressing, an artificial joint, an orthopedic implant a Petrie dish, a face shield, a respirator, a sensor, and an autoclavable article (e.g., a medical or scientific device or a food handling device, either of which can be a tray, dish, syringe, container, or the like).

Welding also enables the joining of complex parts, such as, for example, to provide welded articles for electronics applications. Non-limiting examples include computer and business machine housings such as housings for monitors, handheld electronic device housings such as housings for cell phones, and electrical connectors.

A welded article has a weld line strength is at least 80% of the material strength of the thermoplastic composition. In some aspects, the welded article has a weld line strength is at least 85% of the material strength of the thermoplastic composition. In some aspects, the welded article has a weld line strength that is at least 90% of the material strength of the thermoplastic composition. In some aspects, the welded article has a weld line strength that is at least 95% of the material strength of the thermoplastic composition. In some aspects, the welded article has a weld line strength of 95-100%, or 98-100% of the material strength of the thermoplastic composition.

This disclosure is further illustrated by the following examples, which are non-limiting.

### EXAMPLES

Components used to prepare the poly(phenylene ether) compositions are summarized in Table 1.

**Table 1**

| Component | Description | Source |
|---|---|---|
| PPE | Poly(2,6-dimethyl-1,4-phenylene ether) having an intrinsic viscosity of about 0.40 deciliter per gram as measured in chloroform at 25°C | SABIC |
| PS | Atactic polystyrene having a melt flow index of 1.9 to 2.9 grams per 10 minutes measured at 200 °C and 5 kilogram load | Ineos Styrenics International SA |
| HIPS | Benzene, ethenyl-, polymer with 1,3-butadiene having a melt flow index of 2.3 g/10 min measured at 200°C and 5 kg. | Total Energies |
| SEBS | Polystyrene-poly(ethylene-butylene)-polystyrene triblock copolymer, having a polystyrene content of about 30 to 33 wt% and a weight average molecular weight of about 253,000 to 310,000 grams/mole | KRATON |
| LDPE | Low density polyethylene having a density of 0.919 gram/milliliter at 25 °C, a melt flow index of 22 grams/10 minutes measured at 190 °C and 2.16 kilogram load, milled to a particle diameter of about 1000 micrometers | SABIC |
| TBPP | Tris(2,4-di-tert-butylphenyl) phosphite, CAS Reg. No. 31570-04-4; obtained as IRGAFOS 168 | BASF |
| ZnO | Zinc oxide, obtained as SACHTOLITH HD-S | Sachtleben |
| ZnS | Zinc sulfide, CAS Reg. No. 1314-98-3; obtained as HARZSIEGEL | Norkem Norzinco GmbH |

Table 2 shows the compositions of Example 1 and Comparative Example 1.

**Table 2.**

| | Unit | Example 1 | Comparative Example 1 |
|---|---|---|---|
| PPE | wt% | 55.22 | 40.50 |
| PS | wt% | 32.98 | ---- |
| HIPS | wt% | ------ | 57.70 |
| SEBS | wt% | 10.00 | ----- |
| LDPE | wt% | 1.50 | 1.50 |
| TBPP | wt% | 0.10 | 0.10 |
| ZnO | wt% | 0.10 | 0.10 |
| ZnS | wt% | 0.10 | 0.10 |
| Total | wt% | 100.00 | 100.00 |

The compositions of Comparative Example 1 and Example 1 were prepared by direct dry-blending of the raw materials and pre-blended and then extruded using a 25 mm diameter twin-screw extruder. The composition was melt-kneaded, extruded, cooled through a water bath and pelletized. A typical extrusion profile is listed in Table 3.

**Table 3.**

| Parameters | units | Example 1 | Comparative Example 1 |
|---|---|---|---|
| Feed (Zone 0) Temp | °C | 40 | 40 |
| Zone 1 Temp | °C | 210 | 210 |
| Zone 2 Temp | °C | 260 | 260 |
| Zone 3 Temp | °C | 280 | 280 |
| Zone 4 Temp | °C | 280 | 280 |
| Zone 5 Temp | °C | 270 | 270 |
| Zone 6 Temp | °C | 280 | 280 |
| Zone 7 Temp | °C | 280 | 280 |
| Zone 8 Temp | °C | 290 | 290 |
| Zone 9 Temp | °C | 300 | 300 |
| Zone 10 Temp | °C | 300 | 300 |
| Die Temp | °C | 290 | 290 |
| Screw speed | rpm | 300 | 300 |
| Throughput | kg/hr | 25 | 25 |
| Vacuum 1 | bar | MAX | MAX |

The compositions were molded into weld test cups on an Arburg 520S molding machine (screw diameter: 35 mm, shot volume: 154 cc, injection pressure: 2500 bar, and clamping force: 1300 kN).

Ultrasonic welding was performed on a BRANSON X2000 ultrasonic welder. The BRANSON X2000 includes a converter of 20 kHz amplitude and a fixed horn with a factor of 2.3. A black booster (factor 2.5X) was used, which delivers a maximum amplitude of 115 µm. In the ultrasonic welding process two parts are joined together. The two parts are called the energy director and energy absorber. The energy director is mainly triangular (90°) which transfers the energy to the peak that result in a heat build-up in that small contact area. This area melts and flows across the energy absorber to form the weld.

Weld strength was determined on the welded test cups with a LLOYD LR30K tensile testing machine with a 10kN loadcell at room temperature. The weld strength was measured on the welded cups was with a special tool to fit in the cups with a constant speed of 10 mm/min. To calculate the strength value in MPa the area (mm²) and force at failure (N) is needed. Calculation is as follows: Strength (MPa) = Force at failure (N) divided by the area of the weld cup (mm²).

Weldcups were prepared using two types of molding conditions: midpoint melt temperature and high melt temperature. The midpoint melt temperture processing conditions for Comparative Example 1 and Example 1 are summarized Table 4.

**Table 4.**

| Parameter | Comparative Example 1 | Example 1 |
|---|---|---|
| Barrel temperature [°C] | 290 - 295 - 285 - 275 - 265 | 290 - 295 - 285 - 275 - 265 |
| Hot runner temperature [°C] | 290-290-295-295 | 290-290-295-295 |
| Tool temperature [°C] (Cav./ Core) | 100 / 100 | 100 / 100 |
| Fill rate [ccm/s] | 14 - 25 - 20 | 14 - 25 - 20 |
| Stroke [ccm] profile inj. | (v/p)13 -15 - 32 | (v/p)13 -15 - 32 |
| Holding pressure [bar] | 950 - 850 - 850 - 180 | 950 - 850 - 850 - 180 |
| Holding time [s] | (Total 6,8 sec) 0,5 - 6,0 - 0,3 | (Total 6,8 sec) 0,5 - 6,0 - 0,3 |
| Cooling time [s] | 18 | 18 |
| Cycle time [s] | ∼31,5 | ∼31,5 |
| | | |
| Plast. speed [mm/s] | 250 | 250 |
| Back pressure [bar] | 50 | 50 |
| Dosing stroke [ccm] | 35 | 35 |
| Switch-over point [ccm] | 13 | 13 |
| Avg. Plast time [s] | 2,28 | 2,28 |
| Decomp. Q (ccm) / V (ccm/s) | 2 / 3 | 2 / 3 |
| Avg. Fill time [s] | 1,07 | 1,07 |
| Avg. cushion [ccm] | 12,10 | 12,45 |
| Avg. Max pressure [bar] | 1000 | 1301 |
| Avg. Pressure @ V/p [bar] | 1000 | 1508 |

The high melt temperture processing conditions for Comparative Example 1 and Example 1 are summarized Table 5.

**Table 5.**

| Parameter | Comparative Example 1 | Example 1 |
|---|---|---|
| Barrel temperature [°C] | 300 - 310 - 300 - 290 - 280 | 300 - 310 - 300 - 290 - 280 |
| Hot runner temperature [°C] | 305-305-310-310 | 305-305-310-310 |
| Tool temperature [°C] (Cav./ Core) | 100 1 100 | 100 1 100 |
| Fill rate [ccm/s] | 14 - 25 - 20 | 14 - 25 - 20 |
| Stroke [ccm] profile inj. | (v/p)13 -15 - 32 | (v/p)13 -15 - 32 |
| Holding pressure [bar] | 950 - 850 - 850 - 180 | 950 - 850 - 850 - 180 |
| Holding time [s] | (Total 6,8 sec) 0,5 - 6,0 - 0,3 | (Total 6,8 sec) 0,5 - 6,0 - 0,3 |
| Cooling time [s] | 18 | 18 |
| Cycle time [s] | ∼31,5 | ∼31,5 |
| | | |
| Plast. speed [mm/s] | 250 | 250 |
| Back pressure [bar] | 50 | 50 |
| Dosing stroke [ccm] | 35 | 35 |
| Switch-over point [ccm] | 13 | 13 |
| Avg. Plast time [s] | 2,28 | 2,15 |
| Decomp. Q (ccm) / V (ccm/s) | 2 / 3 | 2 / 3 |
| Avg. Fill time [s] | 1,07 | 1,07 |
| Avg. cushion [ccm] | 14,11 | 12,06 |
| Avg. Max pressure [bar] | 900 | 1013 |
| Avg. Pressure @ V/p [bar] | 900 | 1013 |

By using a full factorial design of experiment (DoE), directions of the equipment settings were defined to obtain as high as possible weld strength. Three settings, amplitude, weld force and actuator speed, were used in this study as variables. The output was weld strength and cycle time. The technical data sheet (TDS) yield value, the maximum strength at midpoint and the maximum strength at high temperature (HT) are included in Table 6 below.

**Table 6.**

| | TDS yield value | Maximum Strength MP | Maximum Strength HT |
|---|---|---|---|
| Example 1 | 55 MPa | 37.4 MPa (68%) | 39.8 MPa (72%) |
| Comparative Example 1 | 65 MPa | 66.7 MPa (103%) | 63.0 (97%) |

In Table 6, the data refers to the highest achieved weld strength values molded at mid-point (MP) and at high temperature (HT). The percentages are the differences relative to the technical data sheet. It is desirable for the weld strength to be the same as the material strength. As shown in Table 4, the weld strength (maximum strength) is the same (average of maximum strength MP and maximum strength HT is 100%) as the material strength ("TDS value") for the composition of Example 1. This is an improvement as compared with the composition of Comparative Example 1, wherein the weld strength is about 70% (average of maximum strength MP and maximum strength HT is 70%).

This disclosure further encompasses the following aspects.

Aspect 1. A thermoplastic composition comprising: a poly(arylene ether) comprising phenolic terminal functional groups; a polystyrene comprising greater than 98 wt%, preferably greater than 99 wt% repeating units derived from styrene; a hydrogenated block copolymer of an alkenyl aromatic monomer and a conjugated diene; optionally, an additive composition, wherein the weld strength of a welded article comprising the thermoplastic composition is at least 80% of the material strength of the thermoplastic composition.

Aspect 1a. The thermoplastic composition of Aspect 1, wherein the polystyrene is a homopolystyrene.

Aspect 2. The thermoplastic composition of aspect 1 comprising: 40-70 wt% of a poly(arylene ether) comprising phenolic terminal functional groups; 25-60 wt% of a polystyrene comprising greater than 98 wt%, preferably 99 wt% repeating units derived from styrene; 5-15 wt% of the hydrogenated block copolymer of an alkenyl aromatic monomer and a conjugated diene; and optionally, up to 10 wt% of an additive composition, wherein the poly(arylene ether), the polystyrene, the hydrogenated block copolymer, and the optional additive composition total 100 wt%.

Aspect 3. The thermoplastic composition of Aspect 1 or Aspect 2, wherein the weld strength of a welded article is at least 90%, preferably at least 95% of the material strength of the thermoplastic composition.

Aspect 3a. The thermoplastic composition of Aspect 1, wherein the weld strength of a welded article comprising the thermoplastic composition is 95-100%, preferably 98-100% of the material strength of the thermoplastic composition.

Aspect 4. The thermoplastic composition of any one of the preceding aspects, wherein the poly(arylene ether) comprises an intrinsic viscosity of 0.1 to 1.5 deciliter per gram measured by Ubbelohde viscometer at 25 °C in chloroform.

Aspect 5. The thermoplastic composition of any one of the preceding aspects, wherein the hydrogenated block copolymer is a polystyrene-poly(ethylene-butylene)-polystyrene triblock copolymer comprising a polystyrene content of about 25 to 40 wt% and a weight average molecular weight of about 200,000 to 400,000 grams/mole.

Aspect 6. The thermoplastic composition of any one of the preceding aspects, wherein the polystyrene is a homopolystyrene.

Aspect 7. The thermoplastic composition of any one of the preceding aspects, wherein the thermoplastic composition comprises not more than 1 wt%, preferably not more than 0.1 wt% of rubber-modified polystyrene.

Aspect 8. The thermoplastic composition of any one of the preceding aspects, wherein the poly(arylene ether) comprising phenolic terminal functional groups comprises an intrinsic viscosity of 0.1 to 1.5 deciliter per gram measured by Ubbelohde viscometer at 25 °C in chloroform; the homopolystyrene comprises an atactic homopolystyrene having a having a melt flow index of 1 to 5 grams per 10 minutes measured according to ISO 1133-4 (2011) at 200 °C and 5 kilogram load; the hydrogenated block copolymer of an alkenyl aromatic monomer and a conjugated diene comprises a polystyrene-poly(ethylene-butylene)-polystyrene triblock copolymer comprising a polystyrene content of about 25 to 40 wt% and a weight average molecular weight of about 200,000 to 400,000 grams/mole; optionally, an additive composition.

Aspect 9. The thermoplastic composition of any one of the preceding aspects comprising 40-70 wt% of a poly(arylene ether) comprising phenolic terminal functional groups comprises an intrinsic viscosity of 0.1 to 1.5 deciliter per gram measured by Ubbelohde viscometer at 25 °C in chloroform; 25-60 wt% of a polystyrene comprising an atactic homopolystyrene having a having a melt flow index of 1 to 5 grams per 10 minutes measured according to ISO 1133-4 (2011) at 200 °C and 5 kilogram load; 5-15 wt% of a hydrogenated block copolymer of an alkenyl aromatic monomer and a conjugated diene comprising a polystyrene-poly(ethylene-butylene)-polystyrene triblock copolymer comprising a polystyrene content of about 25 to 40 wt% and a weight average molecular weight of about 200,000 to 400,000 grams/mole; optionally, up to 10 wt% of an additive composition, wherein the poly(arylene ether), the polystyrene, the hydrogenated block copolymer, and the optional additive composition total 100 wt%.

Aspect 10. A weldable part comprising the thermoplastic composition of any one of the preceding aspects.

Aspect 11. A method for forming the weldable part of Aspect 10 comprising molding, extruding, or shaping the thermoplastic composition of any one of the preceding aspects to form the weldable part.

Aspect 12. A welded article comprising the weldable part of Aspect 10.

Aspect 13. The welded article of Aspect 12, wherein the article is a layer of a pipe.

Aspect 14. A method for forming a welded article comprising welding the weldable part of Aspect 10 to another thermoplastic part to provide the welded article.

Aspect 15. The method of Aspect 14, wherein the thermoplastic part is a weldable part according to any one of Aspects 1-9.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some aspects", "an aspect", and so forth, means that a particular element described in connection with the aspect is included in at least one aspect described herein, and may or may not be present in other aspects. In addition, it is to be understood that the described elements may be combined in any suitable manner in the various aspects. A "combination thereof' is open and includes any combination comprising at least one of the listed components or properties optionally together with a like or equivalent component or property not listed

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂-₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

While particular aspects have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A thermoplastic composition comprising:
a poly(arylene ether) comprising phenolic terminal functional groups;
a polystyrene comprising greater than 98 wt%, preferably greater than 99 wt% repeating units derived from styrene;
a hydrogenated block copolymer of an alkenyl aromatic monomer and a conjugated diene;
optionally, an additive composition,
wherein the weld strength of a welded article comprising the thermoplastic composition is at least 80% of the material strength of the thermoplastic composition.

2. The thermoplastic composition of claim 1 comprising:
40-70 wt% of a poly(arylene ether) comprising phenolic terminal functional groups;
25-60 wt% of a polystyrene comprising greater than 96 wt%, preferably 98 wt% repeating units derived from styrene;
5-15 wt% of the hydrogenated block copolymer of an alkenyl aromatic monomer and a conjugated diene; and
optionally, up to 10 wt% of an additive composition,
wherein the poly(arylene ether), the polystyrene, the hydrogenated block copolymer, and the optional additive composition total 100 wt%.

3. The thermoplastic composition of Claim 1 or Claim 2, wherein the weld strength of a welded article is at least 90%, preferably at least 95% of the material strength of the thermoplastic composition.

4. The thermoplastic composition of any one of the preceding claims, wherein the poly(arylene ether) comprises an intrinsic viscosity of 0.1 to 1.5 deciliter per gram measured by Ubbelohde viscometer at 25 °C in chloroform.

5. The thermoplastic composition of any one of the preceding claims, wherein the hydrogenated block copolymer is a polystyrene-poly(ethylene-butylene)-polystyrene triblock copolymer comprising a polystyrene content of about 25 to 40 wt% and a weight average molecular weight of about 200,000 to 400,000 grams/mole.

6. The thermoplastic composition of any one of the preceding claims, wherein the polystyrene is a homopolystyrene.

7. The thermoplastic composition of any one of the preceding claims, wherein the thermoplastic composition comprise not more than 1 wt%, preferably not more than 0.1 wt% of rubber-modified polystyrene.

8. The thermoplastic composition of any one of the preceding claims, wherein
the poly(arylene ether) comprising phenolic terminal functional groups comprises an intrinsic viscosity of 0.1 to 1.5 deciliter per gram measured by Ubbelohde viscometer at 25 °C in chloroform;
the homopolystyrene comprises an atactic homopolystyrene having a having a melt flow index of 1 to 5 grams per 10 minutes measured according to ISO 1133-4 (2011) at 200 °C and 5 kilogram load;
the hydrogenated block copolymer of an alkenyl aromatic monomer and a conjugated diene comprises a polystyrene-poly(ethylene-butylene)-polystyrene triblock copolymer comprising a polystyrene content of about 25 to 40 wt% and a weight average molecular weight of about 200,000 to 400,000 grams/mole;
optionally, an additive composition.

9. The thermoplastic composition of any one of the preceding claims comprising
40-70 wt% of a poly(arylene ether) comprising phenolic terminal functional groups comprises an intrinsic viscosity of 0.1 to 1.5 deciliter per gram measured by Ubbelohde viscometer at 25 °C in chloroform;
25-60 wt% of a polystyrene comprising an atactic homopolystyrene having a having a melt flow index of 1 to 5 grams per 10 minutes measured according to ISO 1133-4 (2011) at 200 °C and 5 kilogram load;
5-15 wt% of a hydrogenated block copolymer of an alkenyl aromatic monomer and a conjugated diene comprising a polystyrene-poly(ethylene-butylene)-polystyrene triblock copolymer comprising a polystyrene content of about 25 to 40 wt% and a weight average molecular weight of about 200,000 to 400,000 grams/mole;
optionally, up to 10 wt% of an additive composition,
wherein the poly(arylene ether), the polystyrene, the hydrogenated block copolymer, and the optional additive composition total 100 wt%.

10. A weldable part comprising the thermoplastic composition of any one of the preceding claims.

11. A method for forming the weldable part of claim 10 comprising molding, extruding, or shaping the thermoplastic composition of any one of the preceding claims to form the weldable part.

12. A welded article comprising the weldable part of claim 10.

13. The welded article of claim 12, wherein the article is a layer of a pipe.

14. A method for forming a welded article comprising welding the weldable part of claim 10 to another thermoplastic part to provide the welded article.

15. The method of claim 14, wherein the thermoplastic part is a weldable part according to any one of claims 1-9.
